# EUROPEAN PATENT SPECIFICATION

(11) **EP 3 742 517 B1**
(45) Date of publication and mention of the grant of the patent: **15.11.2023**
(21) Application number: 19211861.0
(22) Date of filing: 27.11.2019
(51) Int. Cl.: H01M 50/30, H01M 10/42

(54) **METHOD FOR DELIVERING FIRE SUPPRESSING AGENT TO LITHIUM ION BATTERY MODULE**
VERFAHREN ZUR ABGABE EINES FEUERUNTERDRÜCKENDEN MITTELS AN EIN LITHIUM-IONEN-BATTERIEMODUL
PROCÉDÉ DE FOURNITURE D'AGENT DE LUTTE CONTRE L'INCENDIE POUR MODULE DE BATTERIE AU LITHIUM-ION

(30) Priority: 20.05.2019 US 201916417569
(43) Date of publication of application: 25.11.2020
(73) Proprietor: Kidde Technologies, Inc., Wilson, NC 27896 (US)
(72) Inventor: SIMPSON, Terry, Wake Forest, NC North Carolina 27587 (US); PORTERFIELD, John W. Jr., Raleigh, NC North Carolina 27616 (US); CHATTAWAY, Adam, Old Windsor, Berkshire SL4 2QG (GB)
(74) Representative: Dehns

(56) References cited:
- EP-A1- 3 028 745
- WO-A2-2006/130363
- KR-A- 20100 099 993

## Description

### BACKGROUND

Exemplary embodiments of the present disclosure pertain to the art of fire suppression in lithium ion batteries.

Despite recent progress and improvements in the safety of lithium ion batteries there are still safety concerns associated with high energy density large scale batteries for electric vehicles and consumer applications. There remains a need for robust fire suppression strategies for lithium ion batteries. WO 2006/130363 A2 describes a tire fire suppression system and vehicle with the same, KR 2010 0099993 A describes a fire suppression system. EP 3028745A1 describes a stand along fire detection and suppression apparatus.

### BRIEF DESCRIPTION

Disclosed is a method for delivering a fire suppressant to a lithium ion battery module. The method includes providing a liquid composition containing a fire suppressant additive to a battery module. The liquid composition is contained within a delivery system that includes at least one eutectic nozzle.

In addition to one or more of the features described above, or as an alternative to any of the foregoing embodiments, the at least one eutectic nozzle is disposed within a battery module housing.

In addition to one or more of the features described above, or as an alternative to any of the foregoing embodiments, the fire suppressant additive includes an alkali metal salt or an aqueous vermiculite dispersion.

In addition to one or more of the features described above, or as an alternative to any of the foregoing embodiments, the liquid composition is a coolant composition and the delivery system is a coolant system.

In addition to one or more of the features described above, or as an alternative to any of the foregoing embodiments, the liquid composition includes water, ethylene glycol, diethylene glycol, propylene glycol, polyalkylene glycol, betaine, various oils, refrigerants, and combinations thereof.

In addition to one or more of the features described above, or as an alternative to any of the foregoing embodiments, the liquid composition includes potassium acetate, potassium lactate, potassium carbonate, potassium bicarbonate, or a combination thereof.

Also disclosed is a fire suppressant system for a lithium ion battery. The fire suppressant system includes a delivery system which has eutectic nozzles disposed within a battery module housing. A liquid composition is disposed within the delivery system. The liquid composition includes a fire suppressant additive.

In addition to one or more of the features described above, or as an alternative to any of the foregoing embodiments, the fire suppressant additive includes an alkali metal salt or an aqueous vermiculite dispersion or a combination thereof.

In addition to one or more of the features described above, or as an alternative to any of the foregoing embodiments, the liquid composition is a coolant composition.

In addition to one or more of the features described above, or as an alternative to any of the foregoing embodiments, the liquid composition includes water, ethylene glycol, diethylene glycol, propylene glycol, polyalkylene glycol, betaine, various oils, refrigerants, and combinations thereof.

In addition to one or more of the features described above, or as an alternative to any of the foregoing embodiments, the liquid composition includes potassium acetate, potassium lactate, potassium carbonate, potassium bicarbonate, or a combination thereof.

Also disclosed is a battery module. The battery module includes a plurality of lithium ion cells and a module housing surrounding the plurality of lithium ion cells. A delivery system is disposed at least partly within the module housing. The delivery system includes at least one eutectic nozzle located within the module housing. A liquid composition comprising a fire suppressant additive is located in the delivery system.

In addition to one or more of the features described above, or as an alternative to any of the foregoing embodiments, the fire suppressant additive includes an alkali metal salt or an aqueous vermiculite dispersion or a combination thereof.

In addition to one or more of the features described above, or as an alternative to any of the foregoing embodiments, the liquid composition is a coolant composition.

In addition to one or more of the features described above, or as an alternative to any of the foregoing embodiments, the liquid composition includes water, ethylene glycol, diethylene glycol, propylene glycol, polyalkylene glycol, betaine, various oils, refrigerants, and combinations thereof.

In addition to one or more of the features described above, or as an alternative to any of the foregoing embodiments, the liquid composition includes potassium acetate, potassium lactate, potassium carbonate, potassium bicarbonate, or a combination thereof.

### BRIEF DESCRIPTION OF THE DRAWINGS

The following descriptions should not be considered limiting in any way. With reference to the accompanying drawings, like elements are numbered alike:
FIG. 1 is a drawing of a lithium ion battery cell;
FIG. 2 is a drawing of a lithium ion battery module; and
FIG. 3 is a drawing of a fire suppression agent delivery system for a lithium ion battery module.

### DETAILED DESCRIPTION

A detailed description of one or more embodiments of the disclosed apparatus and method are presented herein by way of exemplification and not limitation with reference to the Figures.

Lithium ion battery safety continues to be a concern. Once these batteries reach internal temperatures of approximately 90°C self-sustaining exothermic reactions may trigger a thermal runaway event which can result in a fire. Additionally the density of multiple cells can make it difficult to remove heat from the more thermally insulated portions of the battery. One approach to remove heat from the battery is through the use of coolant.

The coolant is a liquid composition disposed in a delivery system that has portions located adjacent to the battery cells. This delivery system can also serve to deliver a fire suppressant additive. The delivery system may include at least one eutectic nozzle. The eutectic nozzles may include a eutectic valve which will activate the delivery system when a fire is present. Eutectic valves melt at a particular temperature thereby opening the nozzle. The eutectic valve is formed, as is well known in the art, by placing a eutectic substance over at least a portion of an opening of the nozzle. The eutectic substance melts at a temperature low enough so that the delivery system is actuated before the runaway temperature is reached. The eutectic substance melts at a temperature that is higher than the maximum normal battery operating temperature. The eutectic substance melts at a specific temperature or over a narrow range of temperatures (typically less than or equal to 50°C, or less than or equal to 25°C, or, less than or equal to 10°C). The eutectic substance can be metallic, polymeric or any other combination of materials that will melt and flow to open the nozzle.

Once the eutectic valves of the nozzle melt, the liquid composition can flow through the delivery system and out through the nozzle. In this way, no additional or active sensors or valves are necessary to release liquid composition from the delivery system through the nozzles.

It is also contemplated that the delivery system for the liquid composition having a fire suppressant additive may be separate from the coolant delivery system.

The liquid composition includes a high thermal capacity liquid and a fire suppressant additive. Exemplary high thermal capacity liquids present in the liquid composition include water, ethylene glycol, diethylene glycol, propylene glycol, polyalkylene glycol, betaine, various oils, refrigerants and combinations thereof In some embodiments the liquid composition includes water.

As mentioned above the liquid composition further comprises a fire suppressant additive. The fire suppressant additive includes an alkali metal salt, a vermiculite suspension or a combination thereof. Exemplary alkali metal salts include potassium iodide, potassium bromide, sodium chloride, lithium chloride, potassium acetate, potassium lactate, potassium carbonate, potassium bicarbonate, alkali bromides, alkali borates, alkali sulfates, and combinations thereof.

When the fire suppressant additive is an alkali metal the alkali metal is present in the liquid composition in an amount of 20 to 50 weight percent (wt%), or 30 to 40 wt%, based on the total weight of the liquid composition.

In some embodiments the liquid composition includes water and potassium acetate, potassium lactate, potassium carbonate, potassium bicarbonate, or a combination thereof.

When the fire suppressant additive is a vermiculite suspension the vermiculite suspension is present in an amount of 10 to 20 wt%, or 15 to 20 wt%, based on the total weight of the liquid composition.

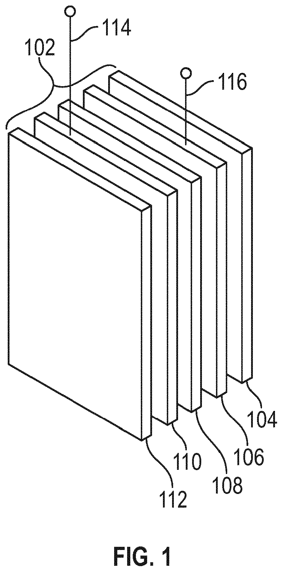

Turning now to the Figures, an exemplary fire suppressant system and battery module are shown. FIG. 1 shows a lithium battery cell 102. The cell 102 includes a separator 104, a cathode 106, a separator 108, an anode 110, and a separator 112. Terminal 116 is connected to the cathode 106. Terminal 114 is connected to the anode 110.

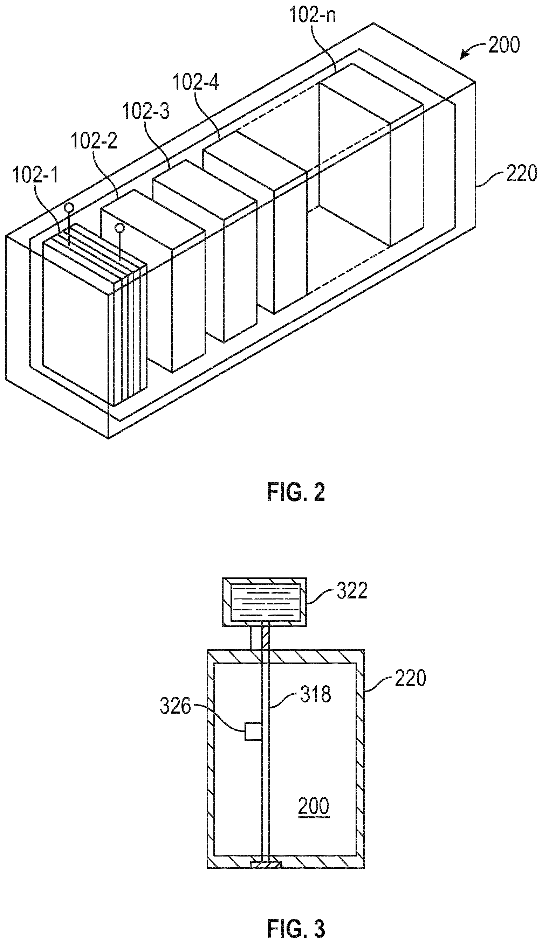

FIG. 2 shows an exploded view of battery module having an array of battery cells including battery cell 102-1, battery cell 102-2, battery cell 102-3, battery cell 102-4, and battery cells through 102-n. A battery module can include any number of lithium battery cells within a housing 220. The battery module may include a number of series connected and/or parallel connected battery cells.

FIG 3 is a view of the delivery system and battery module. FIG. 3 shows a module housing 220. The module housing contains an array of battery cells as shown in FIG. 2. The delivery system includes a channel 318 that connects the liquid composition reservoir 322 to the battery module. While not shown here, the channel may take a circuitous path through the module. The channel may also exit the module and reconnect with the reservoir in order to recirculate the liquid composition for cooling purposes. The channel 318 includes at least one eutectic nozzle 326.

It is further contemplated that the individual battery cells may comprise one or more micro channels to facilitate delivery of the liquid composition and more thoroughly disperse the liquid composition throughout the battery module.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method for delivering a fire suppressant to a lithium ion battery module comprising providing a liquid composition containing a fire suppressant additive to a battery module wherein the liquid composition is contained within a delivery system that comprises at least one eutectic nozzle.

2. The method of claim 1, wherein the at least one eutectic nozzle is disposed within a battery module housing.

3. The method of any preceding claim, wherein the fire suppressant additive comprises an alkali metal salt or an aqueous vermiculite dispersion.

4. The method of any preceding claim, wherein the liquid composition is a coolant composition and the delivery system is a coolant system.

5. The method of any preceding claim, wherein the liquid composition comprises water, ethylene glycol, diethylene glycol, propylene glycol, polyalkylene glycol, betaine, various oils, refrigerants, and combinations thereof.

6. The method of any preceding claim, wherein the liquid composition comprises potassium acetate, potassium lactate, potassium carbonate, potassium bicarbonate, or a combination thereof.

7. A fire suppressant system for a lithium ion battery comprising a delivery system which has eutectic nozzles disposed within a battery module housing (220); a liquid composition is disposed within the delivery system, wherein the liquid composition comprises a fire suppressant additive.

8. The system of claim 7, wherein the fire suppressant additive comprises an alkali metal salt or an aqueous vermiculite dispersion, or
wherein the liquid composition is a coolant composition.

9. The system of any of claims 7 or 8, wherein the liquid composition comprises water, ethylene glycol, diethylene glycol, propylene glycol, polyalkylene glycol, betaine, various oils, refrigerants, and combinations thereof.

10. The system of any of claims 7 to 9, wherein the liquid composition comprises potassium acetate, potassium lactate, potassium carbonate, potassium bicarbonate, or a combination thereof.

11. A battery module comprising:
a plurality of lithium ion cells (102);
a module housing (220) surrounding plurality of lithium ion cells; and
the fire suppressant system of any one of claims 7 to 10.

## Patentansprüche

1. Verfahren zum Abgeben eines Feuerunterdrückers an ein Lithium-Ionen-Batteriemodul, umfassend Bereitstellen einer flüssigen Zusammensetzung, die einen Feuerunterdrückungszusatz enthält, an ein Batteriemodul, wobei die flüssige Zusammensetzung in einem Abgabesystem enthalten ist, das mindestens eine eutektische Düse umfasst.

2. Verfahren nach Anspruch 1, wobei die mindestens eine eutektische Düse innerhalb eines Batteriemodulgehäuses angeordnet ist.

3. Verfahren nach einem der vorhergehenden Ansprüche, wobei der Feuerunterdrückungszusatz ein Alkalimetallsalz oder eine wässrige Vermiculitdispersion umfasst.

4. Verfahren nach einem der vorhergehenden Ansprüche, wobei die flüssige Zusammensetzung eine Kühlmittelzusammensetzung ist und das Abgabesystem ein Kühlmittelsystem ist.

5. Verfahren nach einem der vorhergehenden Ansprüche, wobei die flüssige Zusammensetzung Wasser, Ethylenglykol, Diethylenglykol, Propylenglykol, Polyalkylenglykol, Betain, verschiedene Öle, Kältemittel und Kombinationen davon umfasst.

6. Verfahren nach einem der vorhergehenden Ansprüche, wobei die flüssige Zusammensetzung Kaliumacetat, Kaliumlactat, Kaliumcarbonat, Kaliumbicarbonat oder eine Kombination davon umfasst.

7. Feuerunterdrückungssystem für eine Lithium-Ionen-Batterie, umfassend ein Abgabesystem, das eutektische Düsen aufweist, die innerhalb eines Batteriemodulgehäuses (220) angeordnet sind; wobei eine flüssige Zusammensetzung innerhalb des Abgabesystems angeordnet ist, wobei die flüssige Zusammensetzung einen Feuerunterdrückungszusatz umfasst.

8. System nach Anspruch 7, wobei der Feuerunterdrückungszusatz ein Alkalimetallsalz oder eine wässrige Vermiculitdispersion umfasst oder
wobei die flüssige Zusammensetzung eine Kühlmittelzusammensetzung ist.

9. Verfahren nach einem der Ansprüche 7 oder 8, wobei die flüssige Zusammensetzung Wasser, Ethylenglykol, Diethylenglykol, Propylenglykol, Polyalkylenglykol, Betain, verschiedene Öle, Kältemittel und Kombinationen davon umfasst.

10. System nach einem der Ansprüche 7 bis 9, wobei die flüssige Zusammensetzung Kaliumacetat, Kaliumlactat, Kaliumcarbonat, Kaliumbicarbonat oder eine Kombination davon umfasst.

11. Batteriemodul, umfassend:
eine Vielzahl von Lithium-Ionen-Zellen (102);
ein Modulgehäuse (220), das eine Vielzahl von Lithium-Ionen-Zellen umgibt; und
das Feuerunterdrückungssystem nach einem der Ansprüche 7 bis 10.

## Revendications

1. Procédé de fourniture d'agent de lutte contre l'incendie pour module de batterie au lithium-ion, comprenant la fourniture d'une composition liquide contenant un additif de lutte contre l'incendie à un module de batterie, dans lequel la composition liquide est contenue dans un système de distribution qui comprend au moins une buse eutectique.

2. Procédé selon la revendication 1, dans lequel l'au moins une buse eutectique est disposée à l'intérieur d'un boîtier de module de batterie.

3. Procédé selon une quelconque revendication précédente, dans lequel l'additif de lutte contre l'incendie comprend un sel de métal alcalin ou une dispersion aqueuse de vermiculite.

4. Procédé selon une quelconque revendication précédente, dans lequel la composition liquide est une composition réfrigérante et le système de distribution est un système réfrigérant.

5. Procédé selon une quelconque revendication précédente, dans lequel la composition liquide comprend de l'eau, de l'éthylène glycol, du diéthylène glycol, du propylène glycol, du polyalkylène glycol, de la bétaïne, diverses huiles, des réfrigérants et des combinaisons de ceux-ci.

6. Procédé selon une quelconque revendication précédente, dans lequel la composition liquide comprend de l'acétate de potassium, du lactate de potassium, du carbonate de potassium, du bicarbonate de potassium ou une combinaison de ceux-ci.

7. Système de lutte contre l'incendie pour une batterie au lithium-ion comprenant un système de distribution qui a des buses eutectiques disposées à l'intérieur d'un boîtier de module de batterie (220) ; une composition liquide est disposée à l'intérieur du système de distribution, dans lequel la composition liquide comprend un additif de lutte contre l'incendie.

8. Système selon la revendication 7, dans lequel l'additif de lutte contre l'incendie comprend un sel de métal alcalin ou une dispersion aqueuse de vermiculite, ou
dans lequel la composition liquide est une composition réfrigérante.

9. Système selon l'une quelconque des revendications 7 ou 8, dans lequel la composition liquide comprend de l'eau, de l'éthylène glycol, du diéthylène glycol, du propylène glycol, du polyalkylène glycol, de la bétaïne, diverses huiles, des réfrigérants et des combinaisons de ceux-ci.

10. Système selon l'une quelconque des revendications 7 à 9, dans lequel la composition liquide comprend de l'acétate de potassium, du lactate de potassium, du carbonate de potassium, du bicarbonate de potassium ou une combinaison de ceux-ci.

11. Module de batterie comprenant :
une pluralité de cellules au lithium-ion (102) ;
un boîtier de module (220) entourant une pluralité de cellules au lithium-ion ; et
le système de lutte contre l'incendie selon l'une quelconque des revendications 7 à 10.
